# EUROPEAN PATENT APPLICATION

(11) **EP 4 834 494 A1**
(43) Date of publication of application: **04.11.2026**
(21) Application number: 24911644.3
(22) Date of filing: 31.12.2024
(51) Int. Cl.: B07C 3/00

(54) **FLAT ITEM SORTING ASSISTANCE METHOD, APPARATUS, DEVICE AND SYSTEM, MEDIUM, AND PRODUCT**

(30) Priority: 31.12.2023 CN 202311866894
(71) Applicant: SF Technology Co., Ltd., Shenzhen, Guangdong 518000 (CN)
(72) Inventor: PENG, Xianming, Shenzhen, Guangdong 518000 (CN); LIU, Xiaoping, Shenzhen, Guangdong 518000 (CN); LI, Wuzhao, Shenzhen, Guangdong 518000 (CN)
(74) Representative: Studio Torta S.p.A.
(86) International application number: PCT/CN2024/144276
(87) International publication number: WO 2025/140731

(57) **Abstract**

A flat parcel sorting assistance method, relating to the field of image processing and logistics technologies, including: acquiring (101) a code scanning result of a flat parcel to be sorted at a code scanning position; moving (102) the flat parcel to be sorted to a parcel supply position when it is determined, based on the code scanning result, that a quantity of the flat parcels to be sorted meets a preset quantity condition; acquiring (103) first image information of the flat parcel to be sorted that is collected at the parcel supply position; moving (104) the flat parcel to be sorted to a sorting equipment when it is determined, based on the first image information, that the quantity of the flat parcels to be sorted meets the preset quantity condition and a pose thereof meets a preset pose condition; acquiring (105) second image information of the flat parcel to be sorted that is collected at the sorting equipment; performing (106) a sorting operation when it is determined, based on the second image information, that the quantity of the flat parcels to be sorted meets the preset quantity condition. Also provided are a flat parcel sorting assistance apparatus, a device and a system, and one or more computer-readable storage media and a computer program product.

## Description

### RELATED APPLICATION

The present application claims priority to Chinese Patent Application No. 202311866894.8 filed with China National Intellectual Property Administration on December 31, 2023 and entitled "Flat Parcel Sorting Assistance Method, Apparatus, Device and System, Medium, and Product", which is hereby incorporated by reference in its entirety.

### TECHNICAL FIELD

The present application relates to the technical field of image processing and logistics, and in particular, to a flat parcel sorting assistance method, apparatus, device, system, medium and product.

### BACKGROUND

With the development of automation technology, automatic sorting equipment has been applied to the sorting of parcels in the logistics field.

In current automatic sorting modes, for the flat parcels such as documents, bills, materials and certificates packaged in file envelopes among parcels are usually directly pushed to sorting equipment via a parcel supply table. However, this manner easily causes the floating, mis-sorting or even damage of the flat parcels pushed to the sorting equipment, thus affecting the sorting quality.

### SUMMARY

According to various embodiments provided by the present application, a flat parcel sorting assistance method, apparatus, device, system, storage medium and computer program product are provided.

In a first aspect, the present application provides a flat parcel sorting assistance method, which is applied to a terminal. The method includes:
acquiring a code scanning result of a flat parcel to be sorted at a code scanning position;
moving the flat parcel to be sorted to a parcel supply position when it is determined, based on the code scanning result, that a first quantity of the flat parcels to be sorted meets a preset quantity condition;
acquiring first image information of the flat parcel to be sorted that is collected at the parcel supply position;
moving the flat parcel to be sorted to a sorting equipment when it is determined, based on the first image information, that a second quantity of the flat parcels to be sorted meets the preset quantity condition, and it is determined, based on the first image information, that a pose of the flat parcel to be sorted meets a preset pose condition;
acquiring second image information of the flat parcel to be sorted that is collected at the sorting equipment;
performing a sorting operation on the flat parcel to be sorted when it is determined, based on the second image information, that a third quantity of the flat parcels to be sorted meets the preset quantity condition.

In one of the embodiments, the code scanning result includes a first sub-result and a second sub-result, the first sub-result represents a result obtained by scanning the flat parcel to be sorted from a first preset direction, and the second sub-result represents a result obtained by scanning the flat parcel to be sorted from a second preset direction; the moving the flat parcel to be sorted to the parcel supply position when it is determined, based on the code scanning result, that the first quantity of the flat parcels to be sorted meets the preset quantity condition includes: moving the flat parcel to be sorted to the parcel supply position when the first sub-result is equal to the second sub-result, and it is determined, based on the first sub-result or the second sub-result, that the first quantity of the flat parcels to be sorted meets the preset quantity condition.

In one of the embodiments, the determining, based on the first image information, that the second quantity of the flat parcels to be sorted meets the preset quantity condition includes: acquiring coordinate information of corner points of the flat parcel in the first image information; determining a quantity of first corner point groups according to the coordinate information of the corner points of the flat parcel; determining that the second quantity of the flat parcels to be sorted meets the preset quantity condition when the quantity of the first corner point groups meets a corner point group quantity condition.

In one of the embodiments, the determining, based on the first image information, that the pose of the flat parcel to be sorted meets the preset pose condition includes: acquiring coordinate information of corner points of the flat parcel in the first image information, and acquiring reference coordinate information of the parcel supply position; determining positional relationship information between the flat parcel to be sorted and the parcel supply position according to the coordinate information of the corner points of the flat parcel and the reference coordinate information of the parcel supply position; determining that the pose of the flat parcel to be sorted meets the preset pose condition when the positional relationship information meets a preset position condition.

In one of the embodiments, the determining the positional relationship information between the flat parcel to be sorted and the parcel supply position according to the coordinate information of the corner points of the flat parcel and the reference coordinate information of the parcel supply position includes: determining a first direction corresponding to a parcel supply side edge of the parcel supply position according to the reference coordinate information of the parcel supply position; determining a second direction corresponding to at least one side edge of the flat parcel to be sorted according to the coordinate information of the corner points of the flat parcel; determining the positional relationship information between the flat parcel to be sorted and the parcel supply position according to an angle between the first direction and the second direction.

In one of the embodiments, the determining, based on the second image information, that the third quantity of the flat parcels to be sorted meets the preset quantity condition includes: acquiring coordinate information of corner points of the flat parcel in the second image information; determining a quantity of second corner point groups according to the coordinate information of the corner points of the flat parcel in the second image information; determining whether the third quantity of the flat parcels to be sorted meets the preset quantity condition when the quantity of the second corner point groups meets a corner point group quantity condition.

In one of the embodiments, the method further includes: indicating the flat parcel to be sorted as an abnormal parcel when it is determined, based on the code scanning result, that the first quantity of the flat parcels to be sorted does not meet the preset quantity condition, or it is determined, based on the first image information, that the second quantity of the flat parcels to be sorted does not meet the preset quantity condition, or it is determined, based on the first image information, that the pose of the flat parcel to be sorted does not meet the preset pose condition, or it is determined, based on the second image information, that the third quantity of the flat parcels to be sorted does not meet the preset quantity condition.

In a second aspect, the present application also provides a flat parcel sorting assistance apparatus. The apparatus includes:
a code scanning result acquisition module, configured to acquire a code scanning result of a flat parcel to be sorted at a code scanning position;
a first moving module, configured to, move the flat parcel to be sorted to a parcel supply position, when it is determined, based on the code scanning result, that a first quantity of the flat parcels to be sorted meets a preset quantity condition;
a first image information acquisition module, configured to acquire first image information of the flat parcel to be sorted that is collected at the parcel supply position;
a second moving module, configured to, move the flat parcel to be sorted to a sorting equipment when it is determined, based on the first image information, that a second quantity of the flat parcels to be sorted meets the preset quantity condition, and it is determined, based on the first image information, that a pose of the flat parcel to be sorted meets a preset pose condition;
a second image information acquisition module, configured to acquire second image information of the flat parcel to be sorted that is collected at the sorting equipment;
a sorting module, configured to, perform a sorting operation on the flat parcel to be sorted when it is determined, based on the second image information, that a third quantity of the flat parcels to be sorted meets the preset quantity condition.

In a third aspect, the present application also provides a flat parcel sorting assistance device. The flat parcel sorting assistance device includes a memory and one or more processors, the memory storing computer-readable instructions, where the one or more processors, when executing the computer-readable instructions, implement the following steps:
acquiring a code scanning result of a flat parcel to be sorted at a code scanning position;
moving the flat parcel to be sorted to a parcel supply position when it is determined, based on the code scanning result, that a first quantity of the flat parcels to be sorted meets a preset quantity condition;
acquiring first image information of the flat parcel to be sorted that is collected at the parcel supply position;
moving the flat parcel to be sorted to a sorting equipment when it is determined, based on the first image information, that a second quantity of the flat parcels to be sorted meets the preset quantity condition, and it is determined, based on the first image information, that a pose of the flat parcel to be sorted meets a preset pose condition;
acquiring second image information of the flat parcel to be sorted that is collected at the sorting equipment;
performing a sorting operation on the flat parcel to be sorted when it is determined, based on the second image information, that a third quantity of the flat parcels to be sorted meets the preset quantity condition.

In a fourth aspect, the present application also provides a flat parcel sorting assistance system. The system includes: a code scanning camera configured to scan a flat parcel to be sorted at a code scanning position, a first image acquisition device configured to collect an image of a flat parcel to be sorted at a parcel supply position, a second image acquisition device configured to collect an image of a flat parcel to be sorted at a sorting equipment, and the foregoing flat parcel sorting assistance device.

In one of the embodiments, the number of the code scanning cameras is at least two, and the code scanning cameras are configured to scan the flat parcel to be sorted at the code scanning position from at least two directions.

In one of the embodiments, at least one code scanning camera among the at least two code scanning cameras is configured to scan the flat parcel to be sorted through a transparent part of a tabletop of the code scanning position.

In a fifth aspect, the present application also provides one or more computer-readable storage media. The computer-readable storage medium having stored thereon computer-readable instructions, where the computer-readable instructions, when executed by one or more processors, implement the following steps:
acquiring a code scanning result of a flat parcel to be sorted at a code scanning position;
moving the flat parcel to be sorted to a parcel supply position when it is determined, based on the code scanning result, that a first quantity of the flat parcels to be sorted meets a preset quantity condition;
acquiring first image information of the flat parcel to be sorted that is collected at the parcel supply position;
moving the flat parcel to be sorted to a sorting equipment when it is determined, based on the first image information, that a second quantity of the flat parcels to be sorted meets the preset quantity condition, and it is determined, based on the first image information, that pose of the flat parcel to be sorted meets a preset pose condition;
acquiring second image information of the flat parcel to be sorted that is collected at the sorting equipment;
performing a sorting operation on the flat parcel to be sorted when it is determined, based on the second image information, that a third quantity of the flat parcels to be sorted meets the preset quantity condition.

In a sixth aspect, the present application also provides a computer program product. The computer program product includes computer-readable instructions, where the computer-readable instructions, when executed by one or more processors, implement the following steps:
acquiring a code scanning result of a flat parcel to be sorted at a code scanning position;
moving the flat parcel to be sorted to a parcel supply position when it is determined, based on the code scanning result, that a first quantity of the flat parcels to be sorted meets a preset quantity condition;
acquiring first image information of the flat parcel to be sorted that is collected at the parcel supply position;
moving the flat parcel to be sorted to a sorting equipment when it is determined, based on the first image information, that a second quantity of the flat parcels to be sorted meets the preset quantity condition, and it is determined, based on the first image information, that a pose of the flat parcel to be sorted meets a preset pose condition;
acquiring second image information of the flat parcel to be sorted that is collected at the sorting equipment;
performing a sorting operation on the flat parcel to be sorted when it is determined, based on the second image information, that a third quantity of the flat parcels to be sorted meets the preset quantity condition.

Details of one or more embodiments of the present application are set forth in the following drawings and description. Other features, objects, and advantages of the present application may become apparent from the description, drawings, and claims.

### BRIEF DESCRIPTION OF DRAWINGS

To more clearly illustrate the technical solutions in the embodiments of the present application or in the conventional technology, the drawings used in the description of the embodiments or the conventional technology will be briefly introduced below. Obviously, the drawings described below are merely embodiments of the present application, and those of ordinary skill in the art can also obtain other drawings according to the disclosed drawings without creative efforts.
FIG. 1 is a schematic flow chart of a flat parcel sorting assistance method in an embodiment.
FIG. 2 is a schematic flow chart of steps of determining positional relationship information between a flat parcel to be sorted and a parcel supply position in an embodiment.
FIG. 3 is a schematic scene diagram of determining positional relationship information between a flat parcel to be sorted and a parcel supply position in an embodiment.
FIG. 4 is a schematic flow chart of a flat parcel sorting assistance method in an embodiment.
FIG. 5 is a schematic diagram of an arrangement manner of a code scanning camera in an embodiment.
FIG. 6 is a schematic diagram of an arrangement manner of a first image acquisition device in an embodiment.
FIG. 7 is a structural block diagram of a flat parcel sorting assistance apparatus in an embodiment.
FIG. 8 is an internal structural diagram of a flat parcel sorting assistance device in an embodiment.
FIG. 9 is a schematic structural diagram of a flat parcel sorting assistance system in an embodiment.

### DESCRIPTION OF EMBODIMENTS

The technical solutions in the embodiments of the present application will be clearly and completely described below with reference to the drawings in the embodiments of the present application. Obviously, the described embodiments are merely part of the embodiments of the present application, not all of the embodiments. Based on the embodiments in the present application, all other embodiments obtained by those of ordinary skill in the art without creative efforts shall fall within the protection scope of the present application.

In order to make the objectives, technical solutions and advantages of the present application clearer, the present application will be further described in detail below with reference to the drawings and embodiments. It should be understood that the specific embodiments described herein are only used to explain the present application and are not intended to limit the present application.

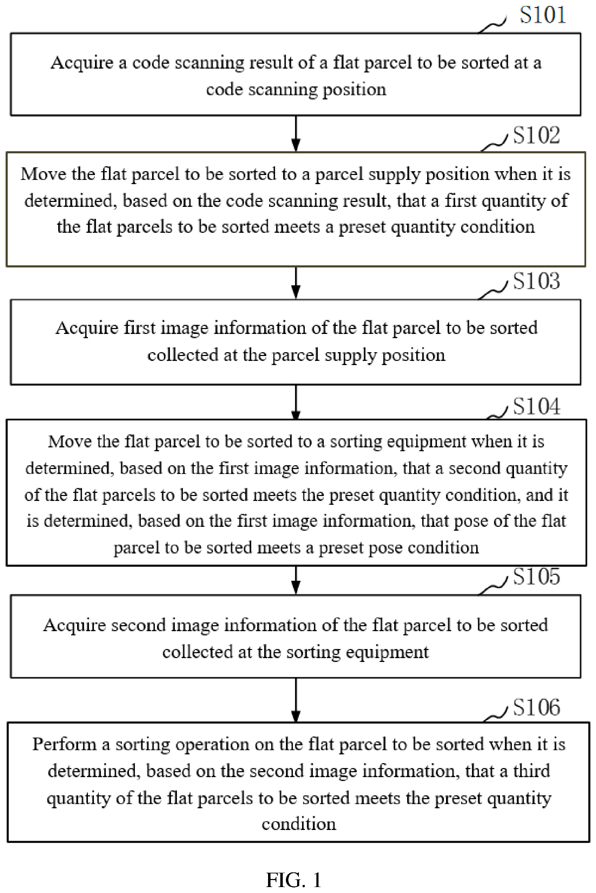

In an embodiment, as shown in FIG. 1, a flat parcel sorting assistance method is provided. The present embodiment is exemplified by applying the method to a terminal. It can be understood that the method may also be applied to a server, and may also be applied to a system including a terminal and a server, and is implemented through interaction between the terminal and the server. In the present embodiment, the method includes the following steps:
Step S101: acquire a code scanning result of a flat parcel to be sorted at a code scanning position.

Specifically, the code scanning position may be a station where a manipulator places the flat parcel after sucking the uppermost flat parcel from a stack of flat parcels during flat parcel sorting. In order to distinguish and mark the flat parcels, surfaces of the flat parcels are usually attached with graphic codes. Based on this, graphic code recognition is performed on the flat parcel to be sorted at the code scanning position, so as to obtain corresponding code scanning results. The code scanning result may include contents of the graphic codes, such as a tracking number of the flat parcel and so on.

Exemplarily, the code scanning results of the flat parcel to be sorted may be output after a code scanning camera arranged at the code scanning position scans the graphic codes of the flat parcel to be sorted, or may be obtained after an image acquisition device arranged at the code scanning position collects images of the flat parcel to be sorted and recognizes graphic code parts in the images.

Step S102: move the flat parcel to be sorted to a parcel supply position when it is determined, based on the code scanning result, that a first quantity of the flat parcels to be sorted meets a preset quantity condition.

Specifically, the preset quantity condition of the flat parcel to be sorted may be determined according to a specific sorting scenario of the flat parcel. For example, when the flat parcels need to be distributed to different sorting compartments, the preset quantity condition may be that the quantity of the flat parcels to be sorted is one; for another example, when a plurality of flat parcels need to be transferred to other processing stations via a sorting equipment in a current sorting operation, the preset quantity condition may be determined as that the quantity of the flat parcels to be sorted is less than a maximum bearing quantity according to the maximum bearing quantity of the flat parcels of the sorting equipment and a target processing station.

Since a same flat parcel usually corresponds to a same graphic code, the first quantity of the flat parcels to be sorted at the code scanning position may be determined according to the quantity of corresponding graphic code content in the code scanning result. When the first quantity meets the preset quantity condition, the flat parcel to be sorted may be transferred from the code scanning position to the parcel supply position.

Step S103: acquire first image information of the flat parcel to be sorted collected at the parcel supply position.

Specifically, the parcel supply position may push the received flat parcel to be sorted onto the sorting equipment. The first image information of the flat parcel to be sorted at the parcel supply position may be acquired through a first image acquisition device arranged at the parcel supply position.

The first image acquisition device may be a depth camera, and the first image information collected by the first image acquisition device may include a depth map of the flat parcel to be sorted at the parcel supply position and coordinate information of sampling points corresponding to the flat parcel to be sorted obtained after processing the depth map.

Step S104: move the flat parcel to be sorted to a sorting equipment when it is determined, based on the first image information, that a second quantity of the flat parcels to be sorted meets the preset quantity condition, and it is determined, based on the first image information, that pose of the flat parcel to be sorted meets a preset pose condition.

Specifically, the quantity and the pose of the flat parcel to be sorted which are not completely overlapped at the parcel supply position may be recognized according to a two-dimensional image corresponding to the flat parcel to be sorted and a corresponding depth map in the first image information. The pose of the flat parcel to be sorted may be a position of the flat parcel to be sorted in the parcel supply position, a rotation angle relative to the parcel supply position, and the like.

The preset pose condition may be set according to sizes of the parcel supply position and the sorting equipment and a positional relationship between the parcel supply position and the sorting equipment. For example, the preset pose condition may be a rotation angle of the flat parcel to be sorted relative to the parcel supply position, an orientation where the flat parcel to be sorted is located, and the like.

When the first image information collected at the parcel supply position indicates that the second quantity of the flat parcels to be sorted meets the preset quantity condition and the pose meets the preset pose condition, it can be considered that the flat parcel to be sorted at the parcel supply position may be smoothly pushed onto the sorting equipment. Therefore, the flat parcel to be sorted at the parcel supply position may be transferred to the sorting equipment.

Step S105: acquire second image information of the flat parcel to be sorted collected at the sorting equipment.

Specifically, the sorting equipment may be a device for performing a sorting operation on the flat parcel to be sorted, such as a sorting cart. At the sorting equipment, the second image information of the flat parcel to be sorted may be collected by a second image acquisition device.

The second image acquisition device may be a depth camera, and the second image information collected by the second image acquisition device may include a depth map and coordinate information of a plurality of sampling points corresponding to the flat parcel to be sorted on the sorting equipment.

Step S106: perform a sorting operation on the flat parcel to be sorted when it is determined, based on the second image information, that a third quantity of the flat parcels to be sorted meets the preset quantity condition.

Specifically, since the flat parcels usually have a relatively high horizontal speed when being pushed from the parcel supply position onto the sorting equipment, the flat parcels easily collide with a baffle on the sorting equipment after entering the sorting equipment, so that adhered flat parcels are separated. Therefore, adhered and overlapped flat parcels at the code scanning position and the parcel supply position tend to be in a non-completely overlapped state on the sorting equipment. Based on this, the quantity of the flat parcels to be sorted may be further recognized through the second image information collected on the sorting equipment. When the recognized third quantity of the flat parcels to be sorted on the sorting equipment meets the preset quantity condition, the sorting operation may be performed on the flat parcel to be sorted.

In the foregoing flat parcel sorting assistance method, a code scanning result of a flat parcel to be sorted at a code scanning position is acquired; when it is determined, based on the code scanning result, that a first quantity of the flat parcels to be sorted meets a preset quantity condition, the flat parcel to be sorted is moved to a parcel supply position; then first image information of the flat parcel to be sorted collected at the parcel supply position is acquired; when it is determined, based on the first image information, that a second quantity of the flat parcels to be sorted meets the preset quantity condition and a pose of the flat parcel to be sorted meets a preset pose condition, the flat parcel to be sorted is moved to a sorting equipment; then second image information of the flat parcel to be sorted collected at the sorting equipment is acquired; and when it is determined, based on the second image information, that a third quantity of the flat parcels to be sorted meets the preset quantity condition, a sorting operation is performed on the flat parcel to be sorted. According to the solution, the quantity of the flat parcels to be sorted is detected respectively at the code scanning position, the parcel supply position and the sorting equipment for multiple links that the flat parcels pass through in automatic sorting, so that an abnormal quantity condition of the flat parcel may be avoided to the greatest extent; moreover, the pose of the flat parcel to be sorted is detected at the parcel supply position, so as to prevent the flat parcel with an abnormal pose at the parcel supply position from being pushed to the sorting equipment, thereby effectively assisting the automatic sorting process of the flat parcels, avoiding floating parcels, wrong sorting and even damage of the flat parcels pushed to the sorting equipment, and ensuring sorting quality.

In an embodiment, the code scanning result includes a first sub-result and a second sub-result, the first sub-result represents a result obtained by scanning the flat parcel to be sorted from a first preset direction, and the second sub-result represents a result obtained by scanning the flat parcel to be sorted from a second preset direction; the foregoing step S102 of moving the flat parcel to be sorted to the parcel supply position when it is determined, based on the code scanning result, that the first quantity of the flat parcels to be sorted meets the preset quantity condition includes: moving the flat parcel to be sorted to the parcel supply position when the first sub-result is equal to the second sub-result, and it is determined, based on the first sub-result or the second sub-result, that the first quantity of the flat parcels to be sorted meets the preset quantity condition.

Specifically, in the present embodiment, it is considering that an accurate code scanning result may not be obtained due to shielding of the graphic code or the like when the flat parcel is scanned from one direction, the graphic code of the flat parcel to be sorted is respectively scanned from the first preset direction and the second preset direction at the parcel supply position, so as to obtain the corresponding first sub-result and second sub-result respectively.

Preferably, at least one preset direction may be included in the first preset direction and the second preset direction, and the flat parcel to be sorted is scanned through a tabletop transparent part of the code scanning position. This enables the graphic code arranged on a surface of the flat parcel to be sorted that is in contact with the tabletop to also be scanned.

Based on the code scanning result obtained by scanning, the first sub-result and the second sub-result may be compared, and when the first sub-result and the second sub-result are equal, the first quantity of the flat parcels to be sorted on the parcel supply table may be determined according to the quantity of tracking numbers of the flat parcels or the like recognized from the graphic code in the first sub-result or the second sub-result. Then, the first quantity may be compared with the preset quantity condition, and when the first quantity meets the preset quantity condition, the flat parcel to be sorted may be transferred from the code scanning position to the parcel supply position. The first sub-result being equal to the second sub-result may mean that the graphic code content obtained by the first sub-result and the second sub-result is the same, for example, the same tracking number of the flat parcel is recognized, etc.

In some other embodiments, it is considering that the flat parcel may be bent, or a surface of the flat parcel on which the graphic code is arranged is not oriented towards a specified direction, so that the first sub-result and the second sub-result may be unequal, it may also be determined whether the first quantity of the flat parcels to be sorted meets the preset quantity condition according to consistency of graphic code information in the first sub-result and the second sub-result. The first sub-result and the second sub-result may be equal or unequal, and according to the consistency of the graphic code information respectively contained in the first sub-result and the second sub-result, the graphic code information may be summarized according to the consistency of the graphic code information. The same graphic code information obtained after summarization corresponds to a same flat parcel, and a type quantity of the graphic code information corresponds to the quantity of the flat parcels to be sorted at the code scanning position. Exemplarily, when the first sub-result and the second sub-result indicate that a plurality of same graphic codes exist, it can be determined that the quantity of the flat parcels to be sorted is one; and when the first sub-result and the second sub-result indicate that multiple different graphic code information exist, the first quantity of the flat parcels to be sorted can be determined according to the type quantity of the graphic code information. Based on this, the first quantity may be compared with the preset quantity condition, and when the first quantity meets the preset quantity condition, the flat parcel to be sorted may be transferred from the code scanning position to the parcel supply position. This enables more accurate judgment on whether the quantity of the flat parcels to be sorted at the parcel supply position meets the preset quantity condition according to the consistency of the graphic code information in the code scanning result.

In the present embodiment, by scanning the flat parcel to be sorted at the code scanning position in at least a first preset direction and a second preset direction, the graphic codes on surfaces of the flat parcel to be sorted may be recognized to a maximum extent, and omission can be avoided. When the first sub-result and the second sub-result corresponding to the two directions respectively are equal, it is determined whether the first quantity of the flat parcels to be sorted meets the preset quantity condition according to one of the results, which can reduce the complexity of the judgment process, obtain the judgment result more conveniently and quickly, and avoid delaying the sorting process.

In an embodiment, determining, based on the first image information, that the second quantity of the flat parcels to be sorted meets the preset quantity condition includes: acquiring coordinate information of corner points of the flat parcel in the first image information; determining a quantity of first corner point groups according to the coordinate information of the corner points of the flat parcel; and determining that the second quantity of the flat parcels to be sorted meets the preset quantity condition when the quantity of the first corner point groups meets a corner point group quantity condition.

Specifically, the first image information may include coordinate information of sampling points corresponding to all flat parcels at the parcel supply position that are not completely covered by other flat parcels. The first image information is processed by an image recognition technology, so that the sampling points corresponding to the corner points of the flat parcel to be sorted may be recognized in the first image information. Further, whether different corner points belong to the same flat parcel can be determined by combining distribution conditions and depth information of the corner points in the images. The coordinate information of the corner points is grouped according to the flat parcels to which the coordinate information belongs, so that one or more first corner point groups may be obtained, where each first corner point group corresponds to one flat parcel to be sorted among the flat parcels to be sorted respectively.

In some other implementations, the quantity of the first corner point groups may also be determined according to the quantity of the coordinate information of the corner points of the flat parcel and the acquired reference quantity of the corner points of the flat parcel. The reference quantity of the corner points of the flat parcel may be acquired according to a shape of the flat parcel. Exemplarily, in the present embodiment, an association relationship between different flat parcel shapes and the corresponding quantities of corner points may be pre-established, for example, the quantity of corner points corresponding to a triangular flat parcel is three, the quantity of corner points corresponding to a quadrangular flat parcel is four, and the like. In the sorting operation, the shape of the flat parcel to be processed this time may be preset, so as to acquire the corresponding reference quantity of the corner points of the flat parcel. Further, the quantity of the first corner point groups may be calculated according to the quantity of the coordinate information of the corner points of the flat parcel and the reference quantity of the corner points of the flat parcel. For example, when processing a flat parcel with a quadrangular shape, the reference quantity of the corner points of the flat parcel may be 4, and when the quantity of the coordinate information of the corner points of the flat parcel is 9, the quantity of the first corner point groups may be calculated to be three.

Based on this, the quantity of the first corner point groups may indicate a minimum value of a possible corresponding quantity of the flat parcels to be sorted at the parcel supply position. Therefore, the corner point group quantity condition may be preset according to the preset quantity condition, and the quantity of the first corner point groups is compared with the corner point group quantity condition, so that it can determined whether the quantity of the flat parcels to be sorted at the parcel supply position meets the preset quantity condition.

In the present embodiment, after the first image information of the parcel supply position is acquired, the quantity of the first corner point groups therein is determined according to the coordinate information of the corner points of the flat parcel in the first image information, and whether the quantity of the flat parcels to be sorted at the parcel supply position meets the preset quantity condition is determined according to whether the quantity of the first corner point groups meets the corner point group quantity condition. Since the first image information may include the coordinate information of the uncovered corner points of all the flat parcel to be sorted at the parcel supply position, the quantity of the first corner point groups determined based on the distribution condition of the coordinate information of the corner points of the flat parcel or the relationship between the coordinate information of the corner points of the flat parcel and the reference quantity of the corner points of the flat parcel may be used for reflecting the quantity of the flat parcels to be sorted at the parcel supply position, and then whether the quantity of the flat parcels to be sorted at the parcel supply position meets the preset quantity condition may be accurately judged according to the relationship between the quantity of the first corner point groups and the corner point group quantity condition.

In one embodiment, determining, based on the first image information, that the pose of the flat parcel to be sorted meets the preset pose condition includes: acquiring coordinate information of corner points of the flat parcel in the first image information, and acquiring reference coordinate information of the parcel supply position; determining positional relationship information between the flat parcel to be sorted and the parcel supply position according to the coordinate information of the corner points of the flat parcel and the reference coordinate information of the parcel supply position; and determining whether the pose of the flat parcel to be sorted meets the preset pose condition when the positional relationship information meets a preset position condition.

Specifically, the reference coordinate information of the parcel supply position may include coordinate information of corner points of a tabletop of the parcel supply position, or coordinate information corresponding to an edge of one side of the tabletop of the parcel supply position. When the tabletop of the parcel supply position is within a field of view of the first image acquisition device, the reference coordinate information of the parcel supply position may be directly acquired from the first image information. In some other implementations, the reference coordinate information of the parcel supply position may also be predetermined according to a positional relationship between the first image acquisition device and the tabletop of the parcel supply position.

Based on this, a direction of at least one side edge of the tabletop of the parcel supply position can be determined according to the reference coordinate information of the parcel supply position, and contour information of the flat parcel to be sorted can be determined according to the coordinate information of corner points of the flat parcel. Furthermore, the positional relationship information of the flat parcel to be sorted relative to the tabletop of the parcel supply position can be determined according to the contour information of the flat parcel to be sorted and the direction of at least one side edge of the tabletop of the parcel supply position, and it can be further determined whether the positional relationship information meets the preset position condition. Exemplarily, the positional relationship information of the flat parcel relative to the tabletop of the parcel supply position may be a rotation angle of the flat parcel relative to the tabletop of the parcel supply position. And the preset position condition may be a threshold range of the rotation angle.

When the reference coordinate information of the parcel supply position includes coordinate information of corner points of the tabletop of the parcel supply position, the contour information of the tabletop of the parcel supply position can be further determined. The contour information of the tabletop of the parcel supply position is compared with the contour information of the flat parcel to be sorted, so as to determine the positional relationship information between the flat parcel to be sorted and the tabletop of the parcel supply position. Exemplarily, the positional relationship information may include a relative orientation of the two, and whether the contour of the flat parcel exceeds the contour of the tabletop of the parcel supply position, and the preset position condition may be a distance range between the flat parcel to be sorted and the center of the tabletop of the parcel supply position, an area range of the contour of the flat parcel to be sorted exceeding the contour of the tabletop of the parcel supply position, and the like.

The positional relationship information between the flat parcel to be sorted and the parcel supply position is compared with the preset position condition, and when the positional relationship information meets the preset position condition, it can be considered that the pose of the flat parcel to be sorted meets the preset pose condition.

In the present embodiment, by acquiring the coordinate information of corner points of the flat parcel and the reference coordinate information of the parcel supply position in the first image information, the positional relationship information such as the rotation angle and the relative orientation of the flat parcel to be sorted in the parcel supply position relative to the parcel supply position can be determined according to the positional relationship therebetween, so that it may be compared with the preset position condition to determine whether the pose of the flat parcel to be sorted in the parcel supply position meets the preset pose condition. The timely identification of an abnormal pose can avoid possible damages and the like when the subsequent flat parcels are transferred to the sorting equipment.

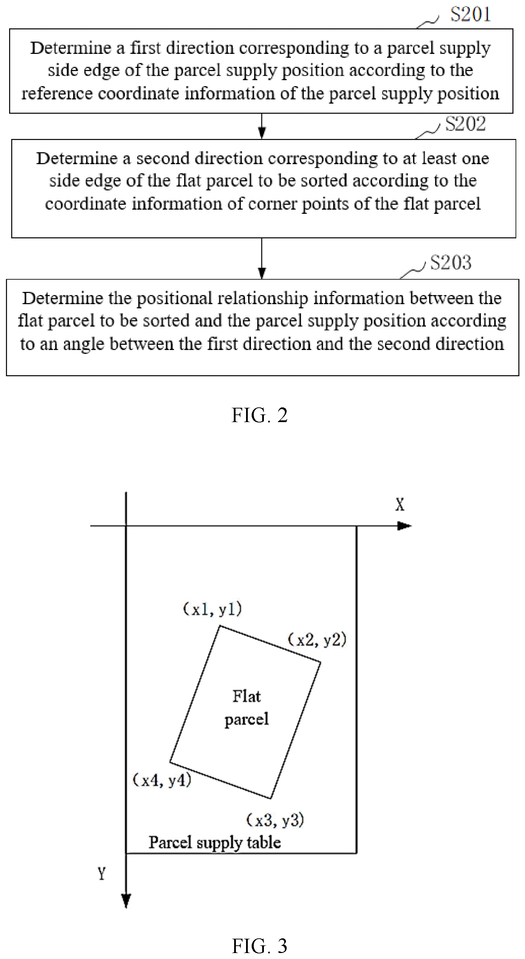

In one embodiment, as shown in FIG. 2, the step of determining the positional relationship information between the flat parcel to be sorted and the parcel supply position according to the coordinate information of corner points of the flat parcel and the reference coordinate information of the parcel supply position includes:
Step S201: determine a first direction corresponding to a parcel supply side edge of the parcel supply position according to the reference coordinate information of the parcel supply position.

Specifically, the parcel supply side edge of the parcel supply position may be a side edge of the tabletop of the parcel supply position through which the flat parcel to be sorted is transferred from the parcel supply position to the sorting equipment. Exemplarily, the reference coordinate information of the parcel supply position may include coordinate information of two corner points corresponding to the parcel supply side edge of the tabletop of the parcel supply position, and the first direction corresponding to the parcel supply side edge can be determined based on the reference coordinate information of the parcel supply position.

It can be understood that the reference coordinate information of the parcel supply position may also include coordinate information of corner points corresponding to other side edges of the tabletop of the parcel supply position. Based on the reference coordinate information of the parcel supply position, a direction corresponding to at least one side edge of the tabletop of the parcel supply position may be obtained, and then the first direction corresponding to the parcel supply side edge may be converted and obtained according to the positional relationship between the side edge and the parcel supply side edge.

Step S202: determine a second direction corresponding to at least one side edge of the flat parcel to be sorted according to the coordinate information of corner points of the flat parcel.

Specifically, the second direction corresponding to any side edge of the flat parcel to be sorted can be determined according to the coordinate information of two corner points corresponding to the side edge in the coordinate information of corner points of the flat parcel.

Step S203: determine the positional relationship information between the flat parcel to be sorted and the parcel supply position according to an angle between the first direction and the second direction.

Specifically, according to the first direction and the second direction respectively determined in Step S201 and Step S202, the angle between the first direction and the second direction can be further determined in this step, which is taken as the rotation angle of the flat parcel to be sorted relative to the parcel supply side edge, so as to obtain the positional relationship information between the flat parcel to be sorted and the parcel supply position.

Preferably, in the present embodiment, one corner point of the parcel supply side edge of the parcel supply position may be set as a coordinate origin, and the direction of the parcel supply side edge may be set as an X-axis of a coordinate system. Based on this, the corner points of the flat parcel to be sorted may be projected onto a plane where the tabletop of the parcel supply position is located, and planar coordinate information thereof on the plane may be obtained. Furthermore, a slope of a straight line where at least one side edge of the flat parcel to be sorted is located may be obtained through the planar coordinate information of the corner points, so as to determine an angle between the second direction where the side edge is located and the first direction where the parcel supply side edge of the parcel supply position is located.

Exemplarily, the foregoing scenario may be shown in FIG. 3, where an origin of the coordinate system is one endpoint of the parcel supply side edge of the parcel supply position, the X-axis is a straight line where the parcel supply side edge of the parcel supply position is located, and the coordinate information corresponding to the four corner points of the flat parcel to be sorted are respectively represented as (x1, y1), (x2, y2), (x3, y3), (x4, y4). The calculation manner of the angle θ between the first direction and the second direction may be as the following formula: $θ = \left\{\begin{matrix}\frac{{tan}^{- 1} \left(\frac{y 2 - y 1}{x 2 - x 1}\right) + {tan}^{- 1} \left(\frac{y 3 - y 4}{x 3 - x 4}\right)}{2} & if \left|y2-y1\right| > {10}^{- 5} \\ 0 & otherwise\end{matrix}\right.$

Since the shape of the flat parcel to be sorted is rectangular, the angle θ between the first direction and the second direction may be obtained through an average value of an included angle between the X-axis and the straight line determined by coordinates (x1, y1) and (x2, y2) and an included angle between the X-axis and the straight line determined by coordinates (x3, y3) and (x4, y4), so as to more accurately reflect the rotation angle of the flat parcel to be sorted.

In the present embodiment, considering that the flat parcel to be sorted in the parcel supply position need to be transferred to the sorting equipment via the parcel supply side edge, and the flat parcel to be sorted is easily damaged during the transfer process when the flat parcel to be sorted rotates excessively relative to the parcel supply side edge, the first direction corresponding to the parcel supply side edge is determined according to the reference coordinate information of the parcel supply position, and the second direction corresponding to at least one side edge of the flat parcel to be sorted is determined according to the coordinate information of corner points of the flat parcel to be sorted, so that the rotation angle of the flat parcel to be sorted relative to the parcel supply side edge of the parcel supply position can be determined according to the angle between the first direction and the second direction. Then, whether the pose of the flat parcel to be sorted meets the preset pose condition can be determined according to whether the angle meets the preset position condition. It can timely detect the excessive rotation of the flat parcel to be sorted, and is conducive to avoiding possible damages and the like when the subsequently the flat parcel to be sorted is transferred to the sorting equipment.

In one embodiment, the determining that a third quantity of the flat parcels to be sorted meets the preset quantity condition based on the second image information includes: acquiring coordinate information of corner points of the flat parcel in the second image information; determining a quantity of second corner point groups according to the coordinate information of the corner points of the flat parcel in the second image information; and determining whether the third quantity of the flat parcels to be sorted meets the preset quantity condition when the quantity of the second corner point groups meets the corner point group quantity condition.

Specifically, in the present embodiment, after the second image information of the flat parcel to be sorted collected at the sorting equipment is acquired, the second image information may be processed through an image recognition technology, to identify sampling points corresponding to the corner points of the flat parcel to be sorted in the second image information, and determine whether different corner points belong to the same flat parcel to be sorted. Then, the coordinate information of the corner points may be grouped according to the flat parcel to be sorted to which the corner points belong, so as to obtain one or more second corner point groups, and thus whether the third quantity of the flat parcels to be sorted meets the preset quantity condition can be determined according to whether the quantity of the second corner point groups meets the corner point group quantity condition.

In other implementations, a reference quantity of corner points of the flat parcel may be further acquired, the quantity of the second corner point groups can be determined according to the quantity of the coordinate information of corner points of the flat parcel in the second image information and the reference quantity of the corner points of the flat parcel, and then whether the third quantity of the flat parcels to be sorted meets the preset quantity condition can be determined according to whether the quantity of the second corner point groups meets the corner point group quantity condition.

In the present embodiment, after the second image information collected at the sorting equipment is acquired, the quantity of the second corner point groups therein is determined according to the coordinate information of the corner points of the flat parcel in the second image information, and whether the quantity of the flat parcels to be sorted on the parcel supply position meets the preset quantity condition is determined according to whether the quantity of the second corner point groups meets the corner point group quantity condition. The quantity of the flat parcels to be sorted on the sorting equipment can be conveniently and quickly estimated, and whether the quantity meets the preset quantity condition can be accurately determined, which is conducive to avoiding mis-sorting, damages and the like caused by putting the flat parcel to be sorted with abnormal quantity into the sorting compartments subsequently.

In one embodiment, the foregoing method further includes: indicating the flat parcel to be sorted as an abnormal parcel when it is determined, based on the code scanning result, that the first quantity of the flat parcels to be sorted does not meet the preset quantity condition, or it is determined, based on the first image information, that the second quantity of the flat parcels to be sorted does not meet the preset quantity condition, or it is determined, based on the first image information, that the pose of the flat parcel to be sorted does not meet the preset pose condition, or it is determined, based on the second image information, that the third quantity of the flat parcels to be sorted does not meet the preset quantity condition.

Specifically, for the code scanning position, the parcel supply position and the sorting equipment through which the flat parcel to be sorted passes during the sorting process, when it is determined that the quantity of the flat parcels to be sorted does not meet the preset quantity condition or the pose thereof does not meet the preset pose condition in any one of the links, the flat parcel to be sorted may be indicated as abnormal parcels. Thus, prompt information may be sent to processing equipment of a corresponding sorting link, and the processing equipment of the corresponding link puts the abnormal parcels into a return port.

In the present embodiment, the abnormal conditions of the flat parcel to be sorted are determined in three links of the code scanning position, the parcel supply position and the sorting equipment respectively, and the abnormal parcels may be identified layer by layer through multi-link inspection, which effectively improves the probability that the abnormal flat parcel to be sorted is successfully identified during the sorting process, and is conducive to avoiding mis-sorting or damages of the abnormal parcels in subsequent sorting.

To further elaborate the flat parcel sorting assistance method of the present application, detailed embodiments are provided below for illustration.

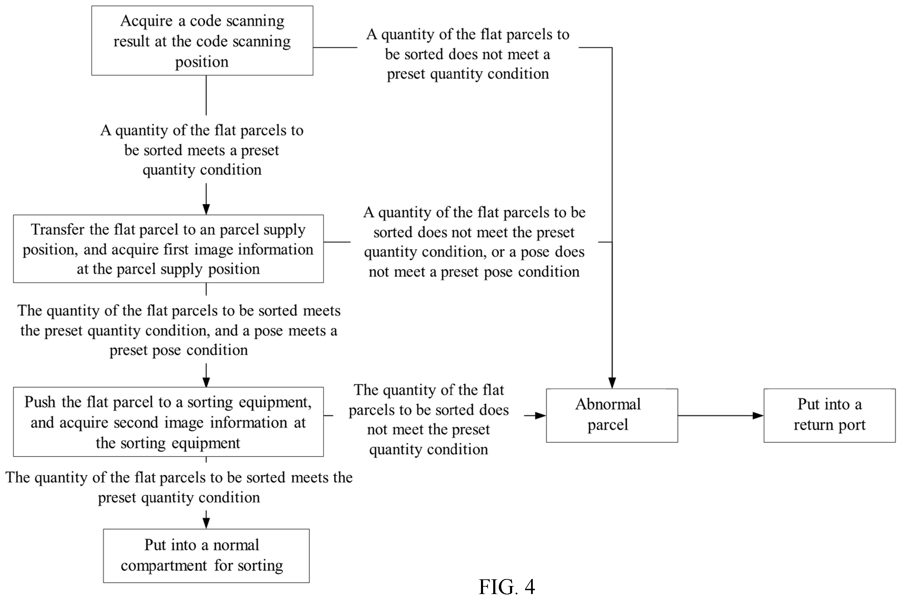

Specifically, as shown in FIG. 4, with the method in the present embodiment, a quantity or a pose of a flat parcel to be sorted can be identified respectively for the links of the code scanning position, the parcel supply position and the sorting equipment through which the flat parcel to be sorted passes during the sorting process, and comparation can be made between the identified quantity and a preset quantity condition and between a pose and a preset pose condition, so as to determine whether the flat parcel to be sorted is abnormal parcels, and the sorting equipment performs subsequent processing on the flat parcel to be sorted according to the detection result. The sorting equipment in the present embodiment is a sorting cart, the preset quantity condition may be that the quantity of the flat parcels to be sorted is one, and the preset pose condition may be that the rotation angle of the flat parcel to be sorted is less than a threshold angle. The threshold angle may be set to 10 degrees.

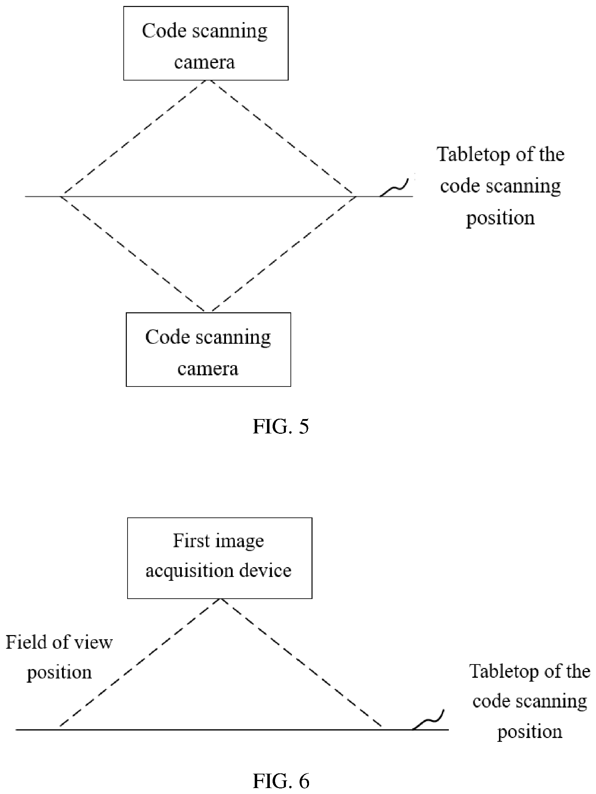

At the code scanning position, at least two code scanning cameras may perform code scanning for the flat parcel to be sorted on the tabletop thereof from at least two directions to acquire a code scanning result. As shown in FIG. 5, the at least two code scanning cameras may include a first code scanning camera arranged above the tabletop of the code scanning position and a second code scanning camera arranged below the tabletop of the code scanning position respectively. The first code scanning camera may perform code scanning for the flat parcel to be sorted on the tabletop of the code scanning position from a top surface, and the second code scanning camera may perform code scanning for the flat parcel to be sorted from a bottom surface through a transparent part of the tabletop of the code scanning position. The quantity of the flat parcels to be sorted in the code scanning position may be determined according to the consistency of graphic code information contained in the code scanning results obtained by each code scanning camera. Exemplarily, when the code scanning results of the respective code scanning cameras indicate that a plurality of identical graphic codes exist, it may be determined that the quantity of the flat parcels to be sorted is one, and when the code scanning results of the respective code scanning cameras indicate that a plurality of different graphic codes exist, the quantity of the flat parcels to be sorted may be determined according to the type quantity of the graphic codes. Furthermore, the obtained quantity of the flat parcels to be sorted may be compared with the preset quantity condition, when the quantity is greater than 1, the flat parcel to be sorted is indicated as abnormal parcels, otherwise the flat parcel to be sorted is indicated as normal parcels and transferred to the parcel supply position. In some other implementations, since the flat parcel to be sorted may be provided with graphic codes on both surfaces, during the quantity identification at the code scanning position, after the code scanning results of the two code scanning cameras are acquired, it may also be first determined whether the two results are equal, and when the two results are equal, the quantity of the flat parcels to be sorted is determined according to the type quantity of the graphic codes in the code scanning results acquired by any one code scanning camera, and compared with the preset quantity condition.

For the flat parcel to be sorted transferred to the parcel supply position, at the parcel supply position, the flat parcel to be sorted on the tabletop may be pushed to the sorting equipment via the parcel supply side edge of the parcel supply position by using a push plate arranged on one side of the tabletop thereof. As shown in FIG. 6, at the parcel supply position, a first image acquisition device arranged above the tabletop may collect first image information of the tabletop of the parcel supply position and the flat parcel to be sorted on the tabletop. The first image acquisition device may be a smart stereo camera, and the first image information may include a depth map corresponding to a field of view of the first image acquisition device and coordinate information of corner points of the flat parcel to be sorted therein.

According to the coordinate information of the corner points of the flat parcel in the first image information, distribution information, height information and the like of each corner point may be obtained, so that it may be determined whether different corner points belong to the same flat parcel to be sorted. The coordinate information of the corner points of the flat parcel may be grouped according to the flat parcel to be sorted to which the corner points belong, so as to obtain one or more first corner point groups. In some other implementations, the quantity of the first corner point groups may also be calculated according to the quantity of the coordinate information of the flat parcel and a reference quantity of the corner points of the flat parcel. For example, in the case of processing flat parcel to be sorted in a quadrilateral shape, the reference quantity of the corner points of the flat parcel may be 4, and when the quantity of the coordinate information of the corner points of the flat parcel is 9, it may be considered that the quantity of the first corner point groups is 3. Based on the determined quantity of the first corner point groups, it may be further compared with a corner point group quantity condition. The corner point group quantity condition may be set according to the preset quantity condition, and in the present embodiment, the corner point group quantity condition may be that the quantity of the corner point groups is not greater than 1. Based on this, when the quantity of the first corner point groups is greater than 1, it may be indicated that a second quantity of the flat parcels to be sorted on the parcel supply position does not meet the preset quantity condition, and the flat parcel to be sorted is marked as abnormal parcels, and when the quantity of the first corner point groups is equal to 1, it may be indicated that the second quantity of the flat parcels to be sorted on the parcel supply position meets the preset quantity condition.

On the other hand, according to the coordinate information of the corner points of the flat parcel in the first image information, it may also be determined whether the pose of the flat parcel to be sorted meets the preset pose condition. Specifically, in the present embodiment, according to a positional relationship between the first image acquisition device and the tabletop of the parcel supply position, one end point of the parcel supply side edge of the parcel supply position, i.e., one corner point of the tabletop of the parcel supply position, may be set as a coordinate origin, a straight line where the parcel supply side edge is located may be set as an X-axis of a coordinate system, and a plane where the tabletop of the parcel supply position is located may be set as an XY plane of the coordinate system. Based on this, planar coordinate information of each corner point projected onto the plane where the tabletop of the parcel supply position is located may be determined according to the coordinate information of the corner points of the flat parcel. Furthermore, a slope of a straight line where at least one side edge of the flat parcel to be sorted is located may be determined according to the planar coordinate information of each corner point, so that an angle between a second direction where the side edge of the flat parcel is located and a first direction (i.e., the X-axis) where the parcel supply side edge of the parcel supply table is located may be determined, and the angle is taken as a rotation angle of the flat parcel to be sorted, so that positional relationship information between the flat parcel to be sorted and the parcel supply position may be determined. The obtained rotation angle is compared with the threshold angle in the preset pose condition, so that it may be determined whether the pose of the flat parcel to be sorted in the parcel supply position meets the preset pose condition.

When the quantity of the flat parcels to be sorted in the parcel supply position does not meet the preset quantity condition, or the pose does not meet the preset pose condition, the flat parcel to be sorted may be indicated as abnormal parcels. The flat parcel to be sorted for which the image information collection is completed in the parcel supply position and which are indicated as abnormal parcels may be discharged to a return port by the parcel supply table, and the flat parcel to be sorted which is not indicated as abnormal parcels may be pushed to the sorting equipment via the parcel supply side edge of the parcel supply position by the push plate arranged on one side of the tabletop thereof.

For the sorting equipment, a second image acquisition device may be arranged to collect second image information of the flat parcel to be sorted on the sorting equipment. The second image acquisition device may be a smart stereo camera, and the second image information may include a depth map corresponding to a field of view of the second image acquisition device and coordinate information of corner points of the flat parcel to be sorted therein. According to the method for determining the quantity of the flat parcels to be sorted in the parcel supply position, the quantity of second corner point groups corresponding to the coordinate information of the corner points of the flat parcel in the second image information may be determined, and then the quantity of the second corner point groups may be compared with the preset quantity condition to determine whether the flat parcel to be sorted on the sorting equipment meets the preset quantity condition. When the quantity of the flat parcels to be sorted in the sorting equipment does not meet the preset quantity condition, the flat parcel to be sorted may be indicated as abnormal parcels, and the sorting equipment may put the abnormal parcels into the return port. When the quantity of the flat parcels to be sorted in the sorting equipment meets the preset quantity condition, the sorting equipment may put the flat parcel to be sorted into a normal compartment for subsequent sorting.

In the present embodiment, by means of visual identification, the code scanning results or image information acquired by the code scanning cameras and the smart stereo cameras at the code scanning position, the parcel supply position and the sorting equipment are used to identify the quantity and pose of the flat parcel to be sorted and determine whether they meet the preset quantity condition or the preset pose condition, and maximum identification of abnormal parcels may be realized through multi-link layer-by-layer detection. Thereby, through effective identification and processing of abnormal parcels, occurrence of drifting, wrong sorting, even damage and the like of the flat parcels pushed to the sorting equipment may be avoided, and sorting quality is guaranteed.

It should be understood that although all steps in the flowcharts involved in the embodiments as described above are displayed in sequence according to the indication of arrows, these steps are not necessarily executed in sequence according to the order indicated by the arrows. Unless explicitly stated herein, the execution of these steps is not strictly limited in order, and these steps may be executed in other orders. Moreover, at least part of the steps in the flowcharts involved in the embodiments as described above may include a plurality of steps or a plurality of stages, these steps or stages are not necessarily executed and completed at the same moment, but may be executed at different moments, and the execution order of these steps or stages is not necessarily sequential, but may be executed in turn or alternately with other steps or at least part of steps or stages in other steps.

Based on the same inventive concept, an embodiment of the present application further provides a flat parcel sorting assistance apparatus for implementing the flat parcel sorting assistance method involved above. The solution for solving the problem provided by the apparatus is similar to the solution recorded in the method above, so for specific definitions in one or more flat parcel sorting assistance apparatus embodiments provided below, reference may be made to the definitions s for the flat parcel sorting assistance method above, which are not repeated herein.

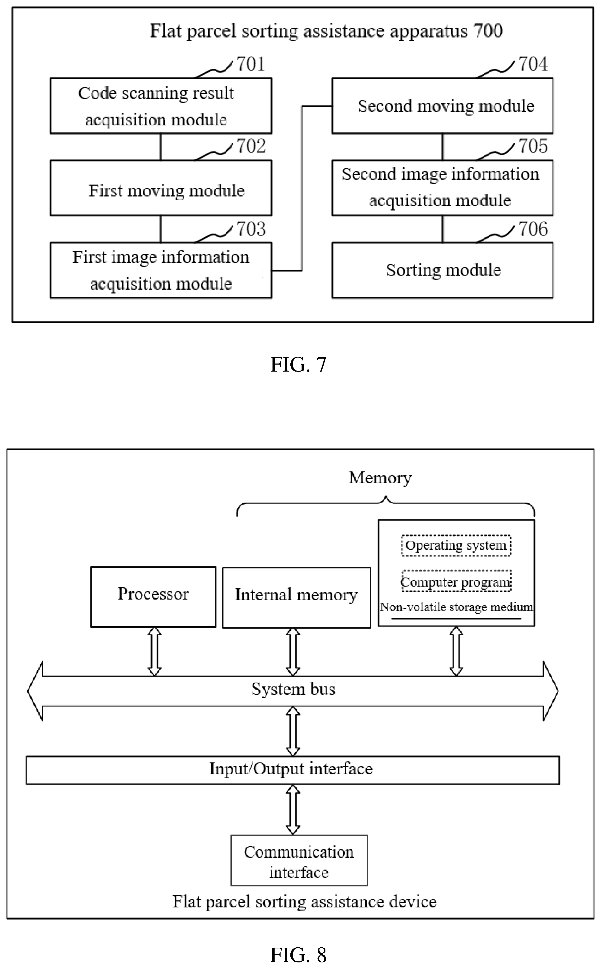

In one embodiment, as shown in FIG. 7, a flat parcel sorting assistance apparatus 700 is provided, including:
a code scanning result acquisition module 701, configured to acquire a code scanning result of a flat parcel to be sorted at a code scanning position;
a first moving module 702, configured to move the flat parcel to be sorted to a parcel supply position when it is determined, based on the code scanning result, that a first quantity of the flat parcels to be sorted meets a preset quantity condition;
a first image information acquisition module 703, configured to acquire first image information of the flat parcel to be sorted collected at the parcel supply position;
a second moving module 704, configured to move the flat parcel to be sorted to a sorting equipment when it is determined, based on the first image information, that a second quantity of the flat parcels to be sorted meets the preset quantity condition, and it is determined, based on the first image information, that a pose of the flat parcel to be sorted meets a preset pose condition;
a second image information acquisition module 705, configured to acquire a second image information sorting equipment of the flat parcel to be sorted collected at the sorting equipment;
a sorting module 706, configured to perform a sorting operation on the flat parcel to be sorted when it is determined, based on the second image information, that a third quantity of the flat parcels to be sorted meets the preset quantity condition.

In one embodiment, the code scanning result includes a first sub-result and a second sub-result, the first sub-result represents a result obtained by scanning the flat parcel to be sorted from a first preset direction, and the second sub-result represents a result obtained by scanning the flat parcel to be sorted from a second preset direction; the first moving module 702 is further configured to move the flat parcel to be sorted to the parcel supply position when the first sub-result is equal to the second sub-result, and it is determined, based on the first sub-result or the second sub-result, that the first quantity of the flat parcels to be sorted meets the preset quantity condition.

In one embodiment, the second moving module 704 is further configured to acquire coordinate information of corner points of the flat parcel in the first image information; determine a quantity of first corner point groups according to the coordinate information of the corner points of the flat parcel in the first image information; and determine that the second quantity of the flat parcels to be sorted meets the preset quantity condition when the quantity of the first corner point groups meets the corner point group quantity condition.

In one embodiment, the second moving module 704 is further configured to acquire coordinate information of corner points of the flat parcel in the first image information, and acquire reference coordinate information of the parcel supply position; determine positional relationship information between the flat parcel to be sorted and the parcel supply position according to the coordinate information of the corner points of the flat parcel and the reference coordinate information of the parcel supply position; and determine whether the pose of the flat parcel to be sorted meets the preset pose condition when the positional relationship information meets the preset position condition.

In one embodiment, the second moving module 704 is further configured to determine a first direction corresponding to a parcel supply side edge of the parcel supply position according to the reference coordinate information of the parcel supply position; determine a second direction corresponding to at least one side edge of the flat parcel to be sorted according to the coordinate information of the corner points of the flat parcel; and determine the positional relationship information between the flat parcel to be sorted and the parcel supply position according to an angle between the first direction and the second direction.

In one embodiment, the sorting module 706 is further configured to acquire coordinate information of corner points of the flat parcel in the second image information; determine a quantity of second corner point groups according to the coordinate information of the corner points of the flat parcel in the second image information; and determine whether the third quantity of the flat parcels to be sorted meets the preset quantity condition when the quantity of the second corner point groups meets the corner point group quantity condition.

In one embodiment, the foregoing apparatus further includes an abnormal parcel indication module, configured to indicate the flat parcel to be sorted as an abnormal parcel when it is determined, based on the code scanning result, that the first quantity of the flat parcels to be sorted does not meet the preset quantity condition, or it is determined, based on the first image information, that the second quantity of the flat parcels to be sorted does not meet the preset quantity condition, or it is determined, based on the first image information, that the pose of the flat parcel to be sorted does not meet the preset pose condition, or it is determined, based on the second image information, that the third quantity of the flat parcels to be sorted does not meet the preset quantity condition.

Each of the modules in the foregoing flat parcel sorting assistance apparatus may be implemented in whole or in part by software, hardware, and combinations thereof. Each of the foregoing modules may be embedded in, or independent of, one or more processors in a computer device or a flat parcel sorting assistance device in the form of hardware, or may be stored in a memory in the computer device or the flat parcel sorting assistance device in the form of software, so as to facilitate the one or more processors to invoke and execute operations corresponding to each of the foregoing modules.

In one embodiment, a terminal is provided, and the terminal may be a flat parcel sorting assistance device, an internal structure diagram of which may be as shown in FIG. 8, and may include one or more processors, a memory, an input/output interface (Input/Output, I/O for short), and a communication interface. The processor, the memory and the input/output interface are connected through a system bus, and the communication interface is connected to the system bus through the input/output interface. The processor may be configured to provide computing and control capabilities. The memory may include a non-volatile storage medium and an internal memory. The non-volatile storage medium stores an operating system and computer-readable instructions. The internal memory provides an environment for the operation of the operating system and the computer-readable instructions in the non-volatile storage medium. The input/output interface may be configured to exchange information between the processor and an external device. The communication interface may be configured to communicate with an external terminal through a network connection. The computer-readable instructions, when executed by the processor, implement a flat parcel sorting assistance method.

It can be understood by those skilled in the art that the structure shown in FIG. 8 is only a block diagram of a part of the structure related to the solution of the present application, and does not constitute a limitation on the flat parcel sorting assistance device to which the solution of the present application is applied, and a specific flat parcel sorting assistance device may include more or fewer components than those shown in the figure, or combine certain components, or have a different component arrangement.

In one embodiment, a flat parcel sorting assistance device is provided, including a memory and one or more processors, the memory stores computer-readable instructions, and the one or more processors, when executing the computer-readable instructions, implement the steps in each of the foregoing method embodiments.

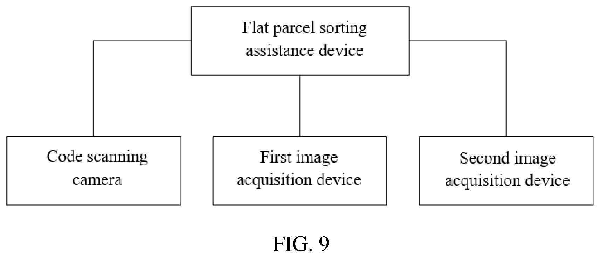

In one embodiment, as shown in FIG. 9, a flat parcel sorting assistance system is provided, the system includes: a code scanning camera configured to perform code scanning for a flat parcel to be sorted at a code scanning position, a first image acquisition device configured to collect an image of a flat parcel to be sorted at a parcel supply position, a second image acquisition device configured to collect an image of a flat parcel to be sorted at a sorting equipment, and the flat parcel sorting assistance device in the foregoing embodiment.

Specifically, the code scanning camera may be connected to the flat parcel sorting assistance device, and may perform code scanning for the flat parcel to be sorted at the code scanning position and send the code scanning result to the flat parcel sorting assistance device. The first image acquisition device may be connected to the flat parcel sorting assistance device, and may collect images of the flat parcel to be sorted at the parcel supply position and send the collected first image information to the flat parcel sorting assistance device. The second image acquisition device may be connected to the flat parcel sorting assistance device, and may collect images of the flat parcel to be sorted at the sorting equipment and send the collected second image information to the flat parcel sorting assistance device.

The system in the present embodiment, by arranging the code scanning camera at the code scanning position, the first image acquisition device at the parcel supply position, and the second image acquisition device at the sorting equipment, code scanning results or image information of the flat parcel to be sorted can be collected in different links of the flat parcel sorting process, so that the flat parcel sorting assistance device can accurately determine whether the quantity and pose of the flat parcel to be sorted meets the preset quantity condition or the preset pose condition according to the received code scanning results and image information, which is conducive to avoiding drifting, wrong sorting, even damage and the like of flat parcels with abnormal quantity or poses in the sorting process, and ensures sorting quality.

In one embodiment, the quantity of the code scanning cameras is at least two, and the code scanning cameras are configured to perform code scanning for the flat parcel to be sorted at the code scanning position from at least two directions.

Specifically, the system in the present embodiment may include at least two code scanning cameras, which may be respectively arranged at different positions of the code scanning position, to perform code scanning for the flat parcel to be sorted at the code scanning position from at least two directions, and send the obtained code scanning results to the flat parcel sorting assistance device.

In the present embodiment, the at least two code scanning cameras perform code scanning for the flat parcel to be sorted at the code scanning position from at least two different directions, so that graphic codes on the surfaces of the flat parcel to be sorted can be identified to the maximum extent and omission can be avoided, so that the flat parcel sorting assistance device can more accurately determine whether the quantity of the flat parcels to be sorted at the parcel supply position meets the preset quantity condition according to the obtained code scanning results.

In one embodiment, at least one code scanning camera of the at least two code scanning cameras is configured to perform code scanning for the flat parcel to be sorted through a transparent part of a tabletop of the code scanning position.

Specifically, in the present embodiment, at least one code scanning camera of the two code scanning cameras may be arranged below the tabletop of the code scanning position, and can scan graphic codes on a surface of the flat parcel to be sorted, which is in contact with the tabletop of the code scanning position, through the transparent part of the tabletop of the code scanning position, and send the obtained code scanning result to the flat parcel sorting assistance device.

In the present embodiment, by arranging the code scanning camera capable of perform code scanning for the flat parcel to be sorted through the transparent part of the tabletop of the code scanning position, the graphic codes on the surface of the flat parcel to be sorted, which is in contact with the tabletop of the code scanning position, can also be scanned, which can further avoid omitting the graphic codes, so that the flat parcel sorting assistance device can more accurately estimate the quantity of the flat parcels to be sorted at the code scanning position according to the code scanning results.

In one embodiment, one or more computer-readable storage media are provided, having stored thereon computer-readable instructions, which, when executed by one or more processors, implement the steps in each of the foregoing method embodiments.

In one embodiment, a computer program product is provided, including computer-readable instructions, which, when executed by one or more processors, implement the steps in each of the foregoing method embodiments.

It should be noted that user information (including but not limited to user equipment information, user personal information, etc.) and data (including but not limited to data for analysis, stored data, displayed data, etc.) involved in the present application are all information and data authorized by the user or fully authorized by all parties, and the collection, use and processing of relevant data need to comply with relevant laws, regulations and standards of relevant countries and regions.

Those of ordinary skill in the art can understand that all or part of the processes in the methods of the foregoing embodiments may be completed by instructing relevant hardware through computer-readable instructions, the computer-readable instructions may be stored in a non-volatile computer-readable storage medium, and the computer-readable instructions, when executed, may include the processes of the embodiments of the foregoing methods. Any reference to a memory, a database or other medium used in each embodiment provided in the present application may include at least one of non-volatile and volatile memories. Non-volatile memories may include read-only memory (Read-Only Memory, ROM), magnetic tape, floppy disk, flash memory, optical memory, high-density embedded non-volatile memory, resistive random-access memory (ReRAM), magnetoresistive random-access memory (Magnetoresistive Random Access Memory, MRAM), ferroelectric random-access memory (Ferroelectric Random Access Memory, FRAM), phase change memory (Phase Change Memory, PCM), graphene memory, etc. Volatile memories may include random access memory (Random Access Memory, RAM) or external cache memory, etc. By way of illustration and not limitation, RAM may be in various forms, such as static random access memory (Static Random Access Memory, SRAM) or dynamic random access memory (Dynamic Random Access Memory, DRAM), etc. The databases involved in each embodiment provided in the present application may include at least one of relational databases and non-relational databases. Non-relational databases may include blockchain-based distributed databases, etc., but are not limited thereto. The processors involved in each embodiment provided in the present application may be general-purpose processors, central processing units, graphics processors, digital signal processors, programmable logic devices, quantum computing-based data processing logic devices, etc., but are not limited thereto.

The technical features of the foregoing embodiments may be combined arbitrarily, and for the sake of brevity of description, not all possible combinations of the technical features in the foregoing embodiments are described. However, as long as there is no contradiction in the combination of these technical features, they shall be deemed to be within the scope recited in the present specification.

The foregoing embodiments only express several implementations of the present application, and the descriptions thereof are relatively specific and detailed, but cannot be construed as limitations on the patent scope of the present application. It should be noted that, for those of ordinary skill in the art, without departing from the concept of the present application, several modifications and improvements can be made, and these all fall within the protection scope of the present application. Therefore, the protection scope of the present application shall be subject to the attached claims.

## Claims

1. A flat parcel sorting assistance method, applied to a terminal, comprising:
acquiring a code scanning result of a flat parcel to be sorted at a code scanning position;
moving the flat parcel to be sorted to a parcel supply position when it is determined, based on the code scanning result, that a first quantity of the flat parcels to be sorted meets a preset quantity condition;
acquiring first image information of the flat parcel to be sorted that is collected at the parcel supply position;
moving the flat parcel to be sorted to a sorting equipment when it is determined, based on the first image information, that a second quantity of the flat parcels to be sorted meets the preset quantity condition, and it is determined, based on the first image information, that a pose of the flat parcel to be sorted meets a preset pose condition;
acquiring second image information of the flat parcel to be sorted that is collected at the sorting equipment;
performing a sorting operation on the flat parcel to be sorted when it is determined, based on the second image information, that a third quantity of the flat parcels to be sorted meets the preset quantity condition.

2. The method according to claim 1, wherein the code scanning result comprises a first sub-result and a second sub-result, the first sub-result represents a result obtained by scanning the flat parcel to be sorted from a first preset direction, and the second sub-result represents a result obtained by scanning the flat parcel to be sorted from a second preset direction;
the moving the flat parcel to be sorted to the parcel supply position when it is determined, based on the code scanning result, that the first quantity of the flat parcels to be sorted meets the preset quantity condition comprises:
moving the flat parcel to be sorted to the parcel supply position when the first sub-result is equal to the second sub-result, and it is determined, based on the first sub-result or the second sub-result, that the first quantity of the flat parcels to be sorted meets the preset quantity condition.

3. The method according to claim 1, wherein the determining, based on the first image information, that the second quantity of the flat parcels to be sorted meets the preset quantity condition comprises:
acquiring coordinate information of corner points of the flat parcel in the first image information;
determining a quantity of first corner point groups according to the coordinate information of the corner points of the flat parcel;
determining that the second quantity of the flat parcels to be sorted meets the preset quantity condition when the quantity of the first corner point groups meets a corner point group quantity condition.

4. The method according to claim 1, wherein the determining, based on the first image information, that the pose of the flat parcel to be sorted meets the preset pose condition comprises:
acquiring coordinate information of corner points of the flat parcel in the first image information, and acquiring reference coordinate information of the parcel supply position;
determining positional relationship information between the flat parcel to be sorted and the parcel supply position according to the coordinate information of the corner points of the flat parcel and the reference coordinate information of the parcel supply position;
determining that the pose of the flat parcel to be sorted meets the preset pose condition when the positional relationship information meets a preset position condition.

5. The method according to claim 4, wherein the determining the positional relationship information between the flat parcel to be sorted and the parcel supply position according to the coordinate information of the corner points of the flat parcel and the reference coordinate information of the parcel supply position comprises:
determining a first direction corresponding to a parcel supply side edge of the parcel supply position according to the reference coordinate information of the parcel supply position;
determining a second direction corresponding to at least one side edge of the flat parcel to be sorted according to the coordinate information of the corner points of the flat parcel;
determining the positional relationship information between the flat parcel to be sorted and the parcel supply position according to an angle between the first direction and the second direction.

6. The method according to claim 1, wherein the determining, based on the second image information, that the third quantity of the flat parcels to be sorted meets the preset quantity condition comprises:
acquiring coordinate information of corner points of the flat parcel in the second image information;
determining a quantity of second corner point groups according to the coordinate information of the corner points of the flat parcel in the second image information;
determining whether the third quantity of the flat parcels to be sorted meets the preset quantity condition when the quantity of the second corner point groups meets a corner point group quantity condition.

7. The method according to any one of claims 1 to 6, wherein the method further comprises:
indicating the flat parcel to be sorted as an abnormal parcel when it is determined, based on the code scanning result, that the first quantity of the flat parcels to be sorted does not meet the preset quantity condition, or it is determined, based on the first image information, that the second quantity of the flat parcels to be sorted does not meet the preset quantity condition, or it is determined, based on the first image information, that the pose of the flat parcel to be sorted does not meet the preset pose condition, or it is determined, based on the second image information, that the third quantity of the flat parcels to be sorted does not meet the preset quantity condition.

8. A flat parcel sorting assistance apparatus, comprising:
a code scanning result acquisition module, configured to acquire a code scanning result of a flat parcel to be sorted at a code scanning position;
a first moving module, configured to, move the flat parcel to be sorted to a parcel supply position, when it is determined, based on the code scanning result, that a first quantity of the flat parcels to be sorted meets a preset quantity condition;
a first image information acquisition module, configured to acquire first image information of the flat parcel to be sorted that is collected at the parcel supply position;
a second moving module, configured to, move the flat parcel to be sorted to a sorting equipment when it is determined, based on the first image information, that a second quantity of the flat parcels to be sorted meets the preset quantity condition, and it is determined, based on the first image information, that a pose of the flat parcel to be sorted meets a preset pose condition;
a second image information acquisition module, configured to acquire a second image information sorting equipment of the flat parcel to be sorted that is collected at the sorting equipment;
a sorting module, configured to, perform a sorting operation on the flat parcel to be sorted, when it is determined, based on the second image information, that a third quantity of the flat parcels to be sorted meets the preset quantity condition.

9. A flat parcel sorting assistance device, comprising a memory and one or more processors, the memory storing computer-readable instructions, wherein the one or more processors, when executing the computer-readable instructions, implement the steps of the method according to any one of claims 1 to 7.

10. A flat parcel sorting assistance system, comprising: a code scanning camera configured to scan a flat parcel to be sorted at a code scanning position, a first image acquisition device configured to collect an image of a flat parcel to be sorted at a parcel supply position, a second image acquisition device configured to collect an image of a flat parcel to be sorted at a sorting equipment, and the flat parcel sorting assistance device according to claim 9.

11. One or more computer-readable storage media having stored thereon computer-readable instructions, wherein the computer-readable instructions, when executed by one or more processors, implement the steps of the method according to any one of claims 1 to 7.

12. A computer program product, comprising computer-readable instructions, wherein the computer-readable instructions, when executed by one or more processors, implement the steps of the method according to any one of claims 1 to 7.
